Europäisches Patentamt

European Patent Office

Office européen des brevets

(11) Veröffentlichungsnummer: **0 489 218 A1**

(12) **EUROPÄISCHE PATENTANMELDUNG**

(21) Anmeldenummer: **90890311.5**

(22) Anmeldetag: **03.12.90**

(51) Int. Cl.5: **B01D 39/20**, C04B 38/00, C04B 35/14

Geänderte Patentansprüche gemäss Regel 86 (2) EPÜ.

(43) Veröffentlichungstag der Anmeldung: **10.06.92 Patentblatt 92/24**

(84) Benannte Vertragsstaaten: **AT DE**

(71) Anmelder: **Jager, Stjepan**
**Lovcenska 138**
**YU-41000 Zagreb (Mlinovi)(YU)**

(72) Erfinder: **Jager, Stjepan**
**Lovcenska 138**
**YU-41000 Zagreb (Mlinovi)(YU)**

(74) Vertreter: **Puchberger, Georg, Dipl.-Ing. et al**
**Patentanwälte Dipl.-Ing. Georg Puchberger**
**Dipl.-Ing. Rolf Puchberger Dipl.-Ing. Peter**
**Puchberger Singerstrasse 13 Postfach 55**
**A-1010 Wien(AT)**

(54) **Universalfilter.**

(57) Rohrförmige Filter aus Siliziumdioxid werden durch Formgiessen und Brennen bei 1020 °C hergestellt.

A 5

B 5

a) Technischer Entstehungsbereich der Erfindung

Baustoff - technische Keramik
Aufbau - Siliziumdioxid
Bauform - Rohr 300 x 60 mm, Wandstärke 20 mm

b) Tehnisches Problem

Industriefilterung von: Wasser, Milch, Fruchtsäften, Bier, Druckluft, Öl, Erdöl, chemischen Flüssigkeiten sowie Industrieabwässern; dazu werden verschiedene Filtermittel für den vorher festzustellenden Anwendungszweck eingesetzt, wobei die gegenseitige Abhängigkeit zwischen
    1. Kennzeichen von Medium-Fluid,
    2. dem als Filtermittel eingesetzten Baustofftyp,
    3. Betriebsbedingungen: Temperatur, Druck und Volumen vorbedingt ist.
Durch die Anwendung der bestehenden konzeptionellen Lösungen der Filtermittel für mehrfache Anwendungszwecke wird die Funktionsfähigkeit oder die Leistung der Einrichtung bzw. des Filtermittels in Frage gestellt.
Die Forschungen haben keinen wahlweisen Baustoff angeboten, der beständig gegen verschiedene Medien-Fluida wäre und verhältnismäßig große Arbeitstemperatur- und Arbeitsdruckbereiche, eine effektive Volumenausdehnung bei der effektiven Verringerung des Zeitaufwandes, und gleichzeitig eine Leistung höherer Qualität erlaubte.

c) Stand der Technik

Durch die Entwicklung der Technologie wurden bedeutende Verbesserungen bei den traditionellen, für die Herstellung von Filtermitteln gebräuchlichen Baustoffen, wie Papier, Textil, Kunststoff, Metall, Porenkeramik, usw., erreicht. Es wurden eine höhere Lebensdauer, eine bessere Beständigkeit gegen die Angriffsfreudigkeit der jeweiligen Medien-Fluida sowie eine bessere Hochtemperaturbeständigkeit erzielt. Es blieb jedoch, das Einzweckanwendungsprinzip bestehen.

d) Beschreibung der Lösung des tehnischen Problems

Das Siliziumdioxid, rohrförmig, in der Größe 300 x 60 mm, Wandstärke 20 mm, im Kammer- oder Durchlaufofen bei der Temperatur von 1 020°C gebrannt, sichert eine gezwungene Filterung, wobei verhältnismäßig große Arbeitsdruck- und Arbeitstemperaturabweichungen zur Erhöhung der Wirksamkeit und der Leistungsqualität erlaubt sind. Das Siliziumdioxid als Filtermittel ermöglicht die Beseitigung von feinen und groben Schmutzteilchen, von Stoffen, wodurch die angriffslustigen und nicht angreifenden Flüssigkeiten der verschiedenen spezifischen Gewichte, für primäre oder sekundäre Anwendungszwecke, verunreinigt werden, sowie die Beseitigung von mechanischen Verunreinigungen und dem Kondensat aus der Druckluft.
Die Mehrzweckanwendung wurde durch folgende Lösungen erwirkt:

1. Brand der Erzeugnisse im technologischen Verfahren

Durch den Brand der Erzeugnisse im technologischen Produktionsverfahren wurde die Trägheit im Verhalten gegenüber allen Typen von Medien-Fluida im Betriebstemperaturbereich von 20°C bis 150°C erreicht. Gleichfalls wurde die Gleichwertigkeit der mechanischen Festigkeit der Erzeugnisse beim Einsatz an den Installationen oder Einrichtungen, die unter einem Betriebsdruck bis 80 bar stehen, unter der Kontrolle der Funktionsfähigkeit mit einem Differentialmanometer im Meßbereich 0-2 bar, erzielt.

2. Rohstoffauswahl und -kenndaten

Das Erzeugnis wurde dem Aufbau nach aus Siliziumdioxid - Quarzsand, mit einer besonders vorgewählten Granulometrie, hergestellt, wodurch eine verhältnismäßig hohe Durchlässigkeit des Materials zustande gebracht wurde.
Ebenfalls wurde in der Produktion als Additiv die Natriumkarboxymethylzellulose, die im Rohzustand als Suspensionsmittel und Zähigkeitsregler einwirkt und die Loch- und Porenstruktur beim Brennen, insbesondere bei einem hohen Anteil an Siliziumdioxid, begünstigt, eingesetzt.

d-1) Gemengezusemmensetzung

| POS. | BEZEICHNUNG | % | BEMERKUNG |
|---|---|---|---|
| 1. | Quarzsand | 81,0 | |
| 2. | Kalziumoxid | 13,5 | eigene, interne Kalzinierung und Zubereitung |
| 3. | Kalziumkarbonat | 5,5 | |
| | I N S G E S A M T: | 100,0 | |

Zusätze:

| | | |
|---|---|---|
| 10% Lösung der Na-Karboxymethylzellulose | 13,05 ml | eigene, interne Zubereitung |
| 37% Lösung des Natriumsilikates | 19,13 ml | eigene, interne Zubereitung |

e) Tehnologisches Produktionsverfahren

1. Gemengezubereitung

Das Gemenge wird in drei Stufen zubereitet:
I Stufe - Trockenverfahren
II Stufe - Naßverfahren
III Stufe - Homogenisierung der Suspension

I Stufe - Trockenverfahren

Die Komponenten werden trocken eingesetzt und weisen folgende Proportionalgewichte auf:

| BEZEICHNUNG | GEWICHT |
|---|---|
| Quarzsand | 32,4 kg |
| Kalziumkarbonat | 2,2 kg |
| Kalziumoxid | 5,4 kg |
| I N S G E S A M T: | 40,0 kg |

Der Quarzsand mir einer bestimmten Granulometrie, das fein gemahlene Kalziumkarbonat und das durch ein besonderes Verfahren zubereitete Kalziumoxid werden in einem Drehmischer, zylindrisch oder viereckig, gerührt.
Die Mischzeit des Trockengemenges in dem Drehmischer beträgt 30 Minuten.

II Stufe - Naßverfahren

3

Zu einem Teil des trocken durchgemischten Gemenges werden folgende Beimischungen zudosiert:

| BEZEICHNUNG | GEWICHT |
|---|---|
| Durchgemischtes Gemenge | 5 kg |
| 10% Lösung der Na-Karboxymethylzellulose | 653 ml |
| 37% Lösung des Natriumsilikates | 1 957 ml |

Das naße Zubereitungsverfahren erfolgt in einem Vertikalmischer, durch einen Propellerrührer, in dem Rührtank, der in seinem Unterteil mit einer Ventilöffnung von 50,8 mm zum Herauslassen des Gemenges in die Einrichtung zur Durchführung der III Zubereitungsstufe versehen ist. Das Naßverfahren dauert 3 Minuten.

III Stufe - Homogenisierung der Suspension

Die Homogenisierung der Suspension wird durch Durchsieben in einem Palettenvertikalmischer durchgeführt, wobei der Rührtank am Boden mit einem rostfreien Siebrost mit einer Siebmaschenweite von 2,5 mm versehen ist. Das Verfahren der Siebhomogenisierung dauert 2 - 3 Minuten. Das durchgesiebte Gemisch in dem Kunststofftank ist nun zur weiteren Behandlung in dem technologischen Verfahren - Gegenstandsguß - bereit.

Anmerkung:

Die zweite und dritte Stufe dürfen höchstens 10 Minuten dauern, da andernfalls die Zähigkeit der zubereiteten Suspension verlorengeht und nachher die Aushärtung des Gemenges zustande kommt, was auf die chemische Reaktion der Kalziumhydroxidbildung zurückzuführen ist. Die Einrichtung zur Durchführung der II und III Zubereitungsstufe soll nach jedem Teilverfahren der Trockenzubereitung von 5 kg durchgemischten Gemenges mit Wasser durchgespült werden.

2. Gegenstandsguß

Das Siliziumrohr wird durch Metallformguß gestaltet. Die Konstruktionslösung der Metallform ist den Zeichnungen D1, D2, D3 und D4 zu entnehmen. Das Gießverfahren erfolgt auf dem Schütteltisch, der mit fünf Formträger ausgestattet ist.
Das Gießverfahren erstreckt sich auf vier Stufen:
I Stufe - Formvorbereitung, Position 1, 2 und 3
(Zeichnung D3)
II Stufe - Formaufstellung, Position 1, 2, 3 und 4
(Zeichnung D3)
III Stufe - Gießen
IV Stufe - Formentfernung, Position 1
(Zeichnung D3)

I Stufe - Formvorbereitung, Position 1, 2 und 3 (Zeichnung D3)

Die Teile der dargestellten Positionen 1, 2 und 3 (Zeichnung D3) sind durch Bestreichen mit folgendem Gemisch zu behandeln:

$$\frac{\text{Flüssigseife}}{\text{Motoröl SAE 15 W-40}} = \frac{50}{50}$$

Ein dünner Anstrich wird mit einem Schwamm zur leichteren Abtrennung des Rohgegenstandes von den Metallteilen der Form aufgetragen.

II Stufe - Formaufstellung, Position 1, 2, 3 und 4 (Zeichnung D3)

Die behandelten Formflächen, Position 1, 2 und 3 (Zeichnung D3) werden der nachstehenden Reihenfolge nach zusammengebaut:

1. Der mittlere Formteil, Position 2, wird in den zentralen Kegelsitz des Formlagerbockes, Position 2, hineingesetzt.

2. Zwei Außenformteile, Position 3, werden mit dem Spannring, Position 4, zusammengebaut und auf den Außenkegelsitz des Formlagerbockes, Position 1, montiert.

Fünf fertig montierten Formen werden in die Formträger des Schütteltisches gesetzt und nach der Betätigung des Schütteltisch- Elektromotors wird das Gießverfahren ausgeführt.

III Stufe - Gießen

Das Gießverfahren mit dem homogenisierten Gemisch erfolgt per Hand, durch die Öffnung zwischen der Position 3 und der Position 2 (Zeichnung D3). Nach Abschluß des Gießverfahrens wird der Schütteltisch- Elektromotor ausgeschaltet.

IV Stufe - Formentfernung, Position 1 (Zeichnung D3)

Nach der Ruhezeit von 60 Minuten werden die Formlagerböcke, Position 1, demontiert. Der fest geformte Abguß wird mit den Formteilen, Position 2, 3 und 4, in die Trockenkammer gelegt.

3. Trocknung

Der geformte Rohabguß wird mit den Formteilen, Position 2, 3 und 4 (Zeichnung D3) in die Trockenkammer gelegt, wo das Trockenverfahren und die Aushärtung bei der Temperatur von 45°C in der Dauer von 24 Studen vor sich gehen.

Nach der Trocknung und Aushärtung wird die Form abgebaut, Position 2, 3 und 4, und der Gegenstand ist zum weiteren Brennverfahren bereit.

4. Brandverfahren

Die rohen Abgüße werden in der Horizontal- oder Vertikallage auf die Feuerfestplatten,Typ "Cordierit" gestellt, die mit einem dünnen Auftrag der Suspension aus dem fein gemahlenen Aluminiumoxid und Wasser versehen werden.

Das Brandverfahren erfolgt im Kammer- oder Durchlaufofen bei der Temperatur von 1 020°C in der Dauer von 3 Stunden und 15 Minuten.

BRENNDIAGRAMM

Durch das Brennverfahren kommt die Reaktion der Bildung von Kalziumsilikat, Natriumaluminiumsilikat, einer großen Menge an Alpha-Quarz, niedrigmodifiziert, und einer geringen Menge an Kalziumoxid, das sich nach dem Brennverfahren, durch Hineintauchen des Abgusses in das Wasser in das Kalziumhydroxid umwandelt, zustande.

Das Hineintauchen ins Wasser hat bei der Temperatur des Erzeugnisses von 110°C zu erfolgen, wobei das Verfahren 2 Stunden dauert. Das mit Wasser gesättigte Erzeugnis wird in der Trockenkammer bei der Temperatur von 80°C in der Dauer von 24 Stunden getrocknet.

5. Klassifikation

Die Klassifikation der Erzeugnisse wird durch Sichtkontrolle eines jeden Gegenstandes vorgenommen. Das Erzeugnis soll ein gleichmäßiges strukturelles Aussehen an der ganzen Außen- und Innenfläche aufweisen.

f) Chemische Eigenschaften des Fertigproduktes

| BEZEICHNUNG | % |
|---|---|
| $SiO_2$ | 79,18 |
| $Al_2O_3$ | 2,36 |
| $Fe_2O_3$ | 0,21 |
| CaO | 14,03 |
| MgO | 0,03 |
| $Na_2O$ | 4,19 |
| I N S G E S A M T: | 100,00 |

g) Physikalische Eigenschaften des Fertigproduktes

| WASSERAUFNAHME ABSORPTION % | POROSITÄT % | Q(y = Qg) DICHTE gr/ml | BIEGE-FESTIGKEIT 2 kg/cm | ROHRGEWICHT 300 x 60 mm gr. |
|---|---|---|---|---|
| 35-36 | 58-60 | 1,35-1,40 | 75-80 | 1 020-1 040 |

h) Chemisch-physikalische Eigenschaften der Rohrstoffe und deren Vorbereitung

1. Quarzsand

Chemische Analyse

| BEZEICHNUNG | % |
|---|---|
| $SiO_2$ | 96,00 |
| $Al_2O_3$ | 2,97 |
| $Fe_2O_3$ | 0,11 |
| GLÜHVERLUST | 0,92 |
| I N S G E S A M T: | 100,00 |

Physikalische Eigenschaften

7

| GRANULOMETRIE | |
|---|---|
| mm | % |
| 0.8 | 0,0 |
| 0.5 | 26,9 |
| 0.4 | 22,8 |
| 0.315 | 16,8 |
| 0.2 | 25,1 |
| 0.1 | 7,8 |
| 0.071 | 0,4 |
| $<$ 0.071 | 0,2 |
| I N S G E S A M T: | 100,0 |

2. Kalziumkarbonat

Chemische Analyse

| BEZEICHNUNG | % |
|---|---|
| $SiO_2$ | 0,27 |
| $Al_2O_3$ | 0,15 |
| $Fe_2O_3$ | 0,19 |
| CaO | 55,60 |
| MgO | 0,12 |
| GLÜHVERLUST | 43,67 |
| I N S G E S A M T: | 100,00 |

Physikalische Eigenschaften

Das Kalziumkarbonat wird bis zur Kornfeinheit unter 0,045 mm gemahlen.

3. Kalziumoxid

8

Chemische Analyse

| BEZEICHNUNG | % |
|---|---|
| $SiO_2$ | 0,48 |
| $Al_2O_3$ | 0,27 |
| $Fe_2O_3$ | 0,34 |
| CaO | 98,70 |
| MgO | 0,21 |
| I N S G E S A M T: | 100,00 |

Vorbereitungsverfahren

Das Kalziumkarbonat, gemahlen bis zur Kornfeinheit unter 0,045 mm, in der Menge von 250 Gramm, wird in ein feuerfestes Gefäß mit dem Nutzinhalt von 350 ml hineingelegt. Die feuerfesten Gefäße, die an den feuerfesten Platten Typ "Cordierit" angeordnet werden, werden zusammen mit Siliziumrohren in dem Kammer- oder Durchlaufofen bei der Temperatur von 1 020°C in der Dauer von 3 Stunden und 15 Minuten gebrannt.

Das aus Kalziumkarbonat entstandene Kalziumoxid wird bei der Temperatur von 35°C durch einen rostfreien Siebrost mit der Maschenweite von 0,315 mm durchsiebt. Die angehäufte durchgesiebte Fraktion wird in die Kunstoffverpackung je 5,4 kg untergebracht. Die Verpackung soll hermetisch geschlossen sein und so bis zum Einsatz in der I Stufe der Trockenzubereitung aufbewahrt bleiben.

4. Vorbereitung der 10% Lösung der Natriumkarboxymethylzellulose

In einem Gefäß werden 5 400 ml Wasser auf die Temperatur von 70°C vorgewärmt und mit dem Propellerrührer werden in dem so vorgewärmten Wasser 600 Gramm Natriumkarboxymethylzellulose aufgelöst. Die Lösung soll 24 Stunden vor dem Einsatz ruhen gelassen werden.

5. Vorbereitung der 37% Lösung des Natriumsilikates

Chemische Analyse

| BEZEICHNUNG | % |
|---|---|
| $SiO_2$ | 74,00 |
| $Al_2O_3 + Fe_2O_3$ | 1,85 |
| Fe | 0,15 |
| $Na_2O$ | 24,00 |
| I N S G E S A M T: | 100,00 |

Vorbereitungsverfahren

In einem Gefäß werden 13 910 ml Wasser auf die Temperatur von 60°C vorgewärmt und in dem so vorgewärmten Wasser werden dann 8 170 Gramm Natriumsilikat, mit der Bezeichnung "festes, technisches", mit Molarverhältnis von

$$\frac{SiO_2}{Na_2O} = 3,00-3,30$$

durch den Propellerrührer aufgelöst.

Die Lösung kann abgekühlt zur Temperatur von 25°C und mit dem nachgeprüften spezifischen Gewicht von 1,38 gr/ml eingesetzt werden. Sie wird in der hermetisch verschlossenen Verpackung konserviert, und das Gefäß und der Propellerrührer sind nach Gebrauch, bzw. nach der Zubereitung der Lösung, mit Wasser zu spülen.

i) Konstruktionsmerkmale der Filtermittel-Metallgehäuse und der Formen zur Filtermittelfertigung

Ein Komplementärteil der dargelegten Erfindung sind die Filtermittel-Metallgehäuse, die aus den Konstruktonszeichnungen A1, A2, A3, A4, A5, B1, B2, B3, B4 und B6 zu ersehen sind. Die Zeichnungen A6, A7 und B6 stellen die Zusatzausrüstung der Filtereinrichtung dar und sind nicht der Gegenstand dieser Erfindung.
Durch die wahlweisen Koten in den Zeichnungen A1, A2, A3, A4 und A5 werden die Möglichkeiten des Vertikaleinbaues von 1, 2 oder 3 Filtermittel gezeigt.
Die Kontruktionslösung des Filtermittel-Gehäuses in den Zeichnungen B1, B2, B3, B4 und B5 erlaubt die Anwendung einer identischen Lösung für den Serien-Vertikal- und Horizontal-Zirkular-Paralleleinbau von bis 20 Filtermitteln, wobei der Gehäusemantel bis ⌀ 800 mm aufweisen kann.
Einen Komplementärteil dem beschriebenen Erfindung bilden auch die Zeichnungen der Formen zur Filtermittelfertigung - D1, D2, D3 und D4.

j) Zeichnungen des Filtermittels und der Schutzmarke für das Erzeugnis

In den Zeichnungen C1 und C2 wird das Filtermittel, und in der Zeichnungen E1 die Lösung der Schutzmarke für das Erzeugnis dargestellt.

BESCHREIBUNG DER INDUSTRIEANWENDUNG DER ANGEMELDETEN ERFINDUNG

Die Industrieanwendung der beschriebenen Erfindung wird in Folgenden wirtschaftlichen Zweigen vorgesehen:

1. Wasserwirtschaft
   - Verteilungsstationen für die Versorgung der öffentlichen Wasserleitungsnetze
   - Nachreinigung der Flußwässer, die zur Abkühlung des Kernreaktors eingesetzt werden
   - Mechanische Nachreinigung der Industrieabwässer
2. Erdöl
   - Erdöl- und Erdölproduktreinigung
3. Prozeßindustrie
   - Beseitigung des Ölkondesates und der mechanischen Verunreinigungen aus der Druckluft, die in der Technologie angewendet wird:
     1. Auftragen von verschiedenen Farben und Glasuren durch Farbspritztechnik
        - Metallindustrie
        - Holzindustrie
        - keramische Industrie
        - Automobilindustrie
        - usw.
     2. Oxydationsverfahren
        - chemische Industrie
   - Reinigung von chemischen Flüssigkeiten mit verschiedenen Stufen der Angriffsfreudigkeit
4. Nahrungsmittelindustrie
   - Reinigung von Fruchtsäften, Ölen, usw.

L E G E N D E

= Nahtloses Rohr JUS Č.3100, DIN St.52-4.
Korrosionsschutz: Zn + Plastifizierung
(Stahlguß JUS ČL.4572, DIN G-X7CrNiNb 18 9)
(Stahl JUS Č.4572, DIN x 10 CrNiTi 18 9)

= Konstruktionsstahl JUS Č.0361, DIN R St.37-2.
Korrosionsschutz: Zn + Plastifizierung
(Stahl JUS Č.4572, DIN x 10 CrNiTi 18 9)
(Stahlguß JUS ČL.4572, DIN G-X7CrNiNb 18 9)

= Filtermittel

= Manometer = Buchstaben PM = Komplementarteil
des Universalfilters-Differentialdruck

( ) = Wahlweise Koten und Baustoffe

Buchstaben PA = ANSCHLUß AUTOMATIK = KOMPLEMENTÄRTEIL
DES UNIVERSALFILTERS

———————— = Dichtung

= Schweißnaht

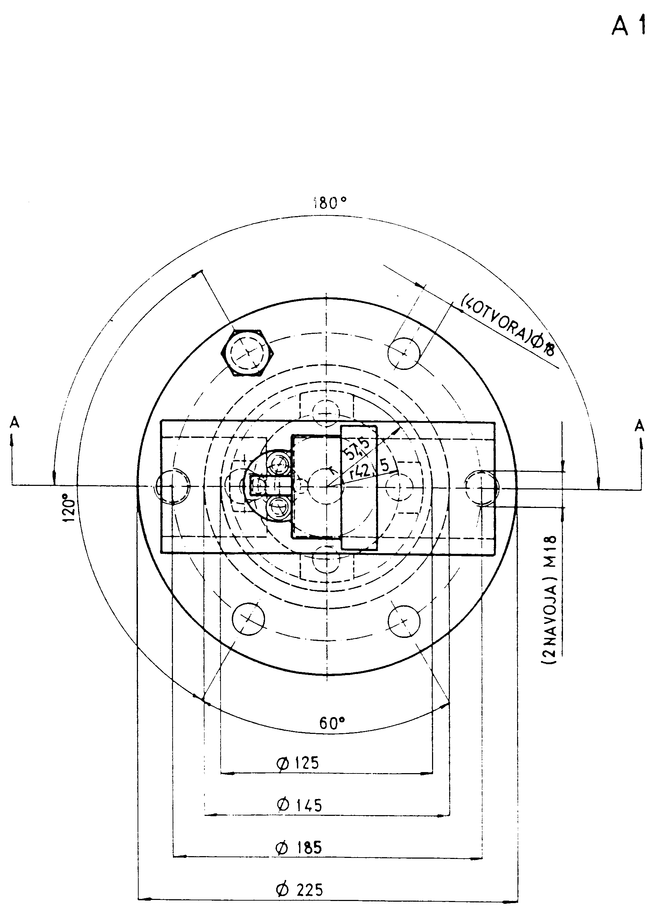

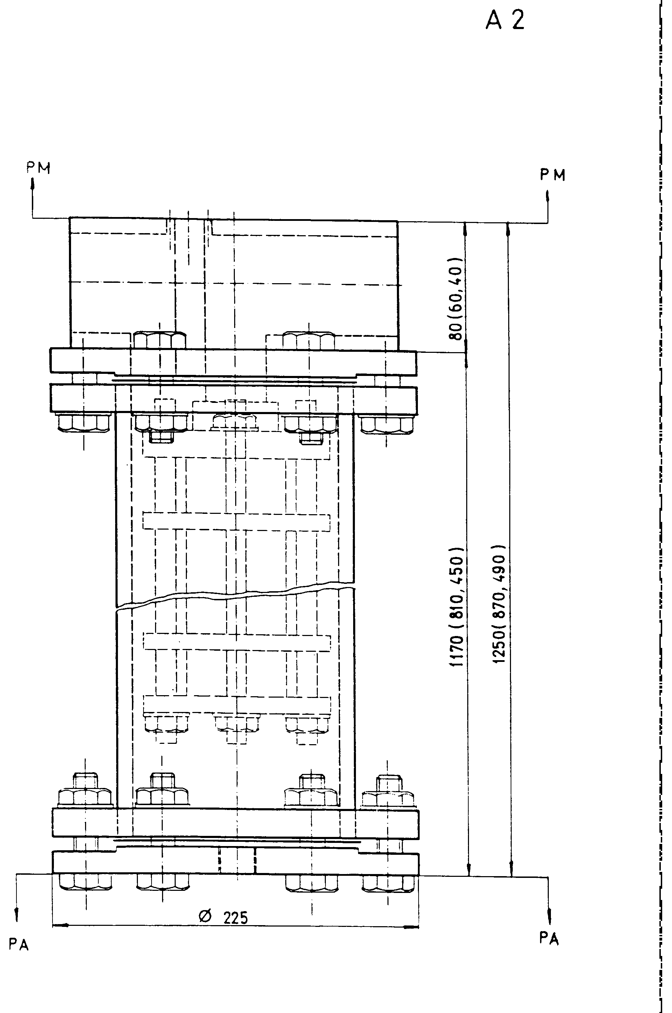

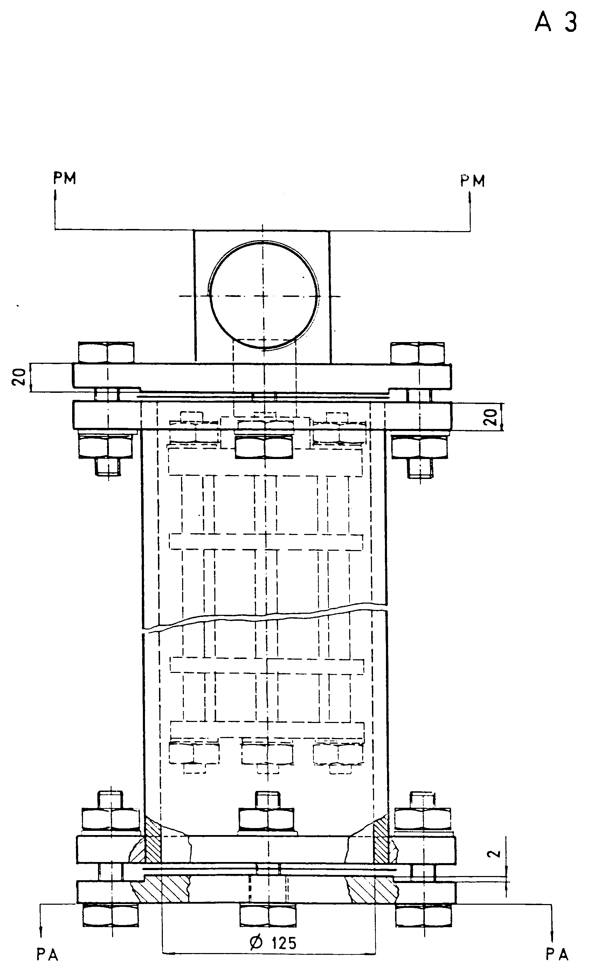

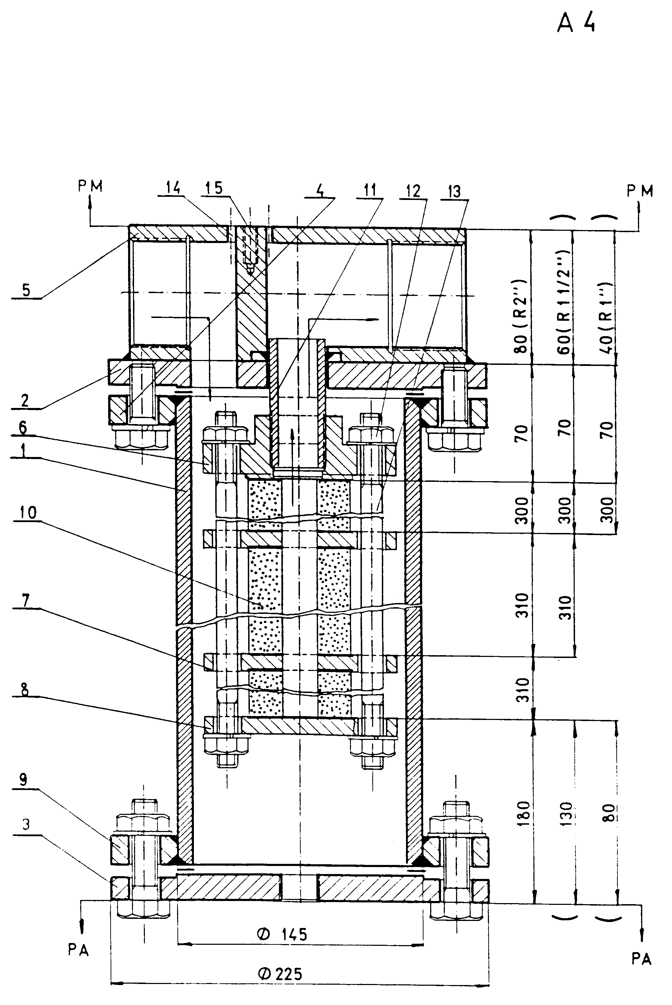

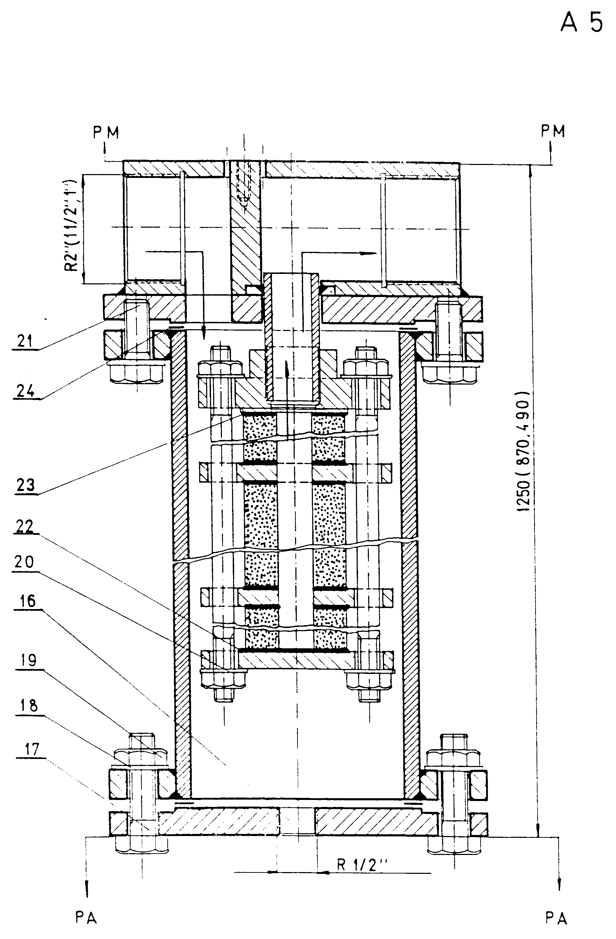

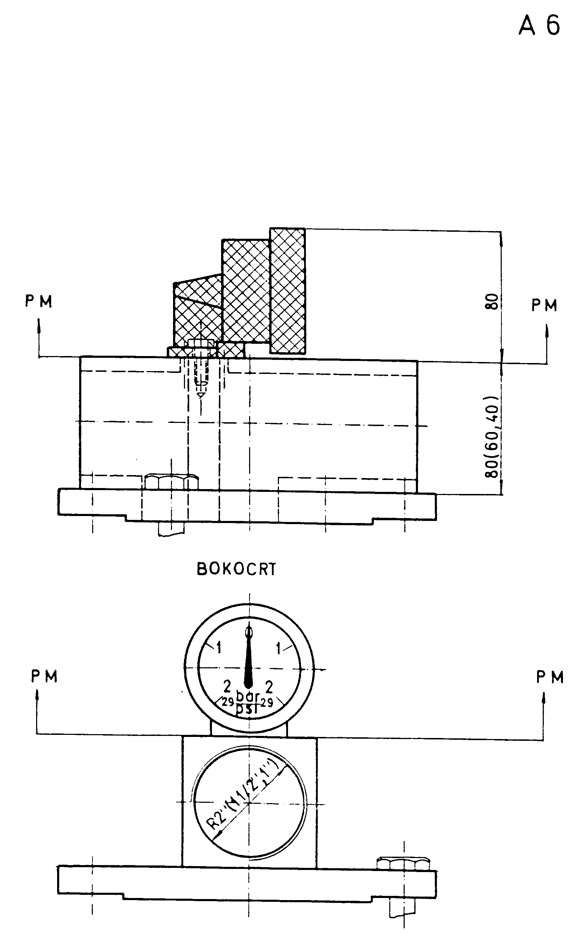

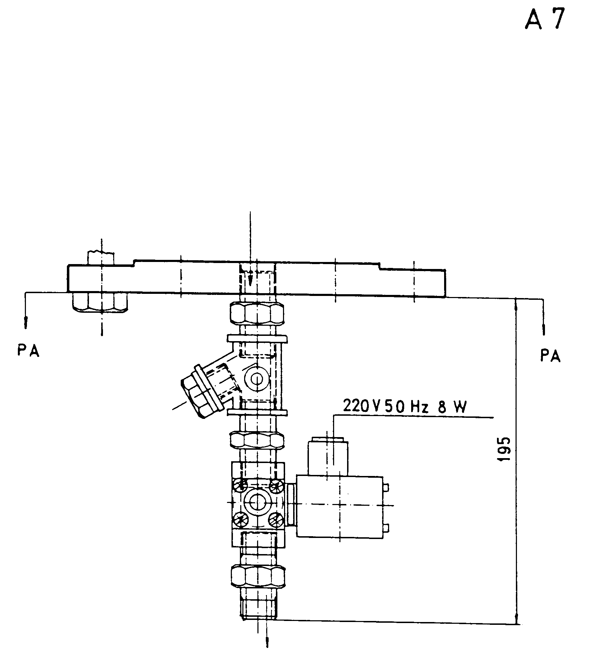

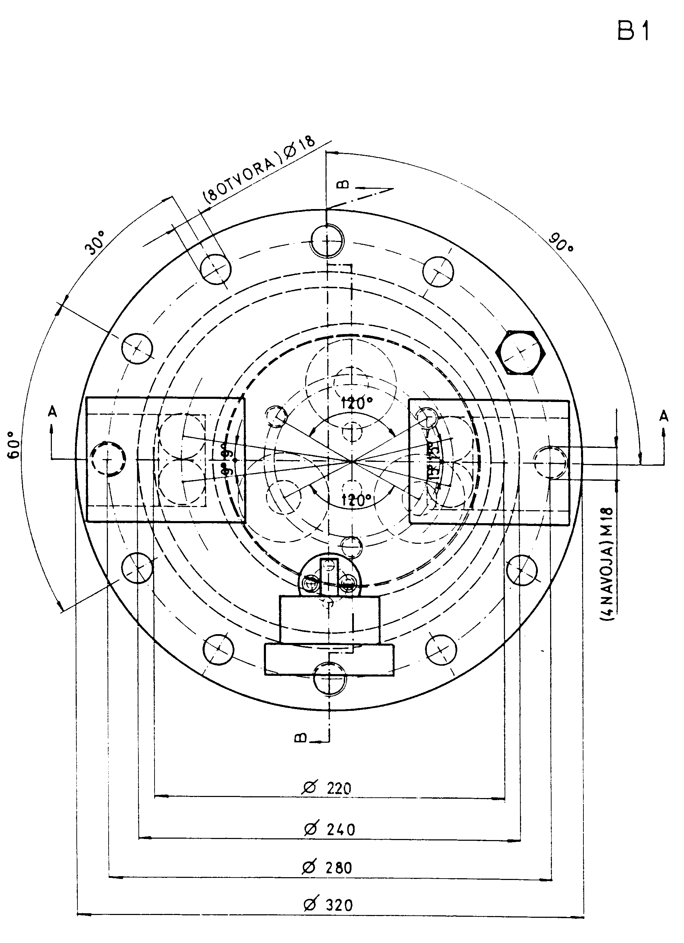

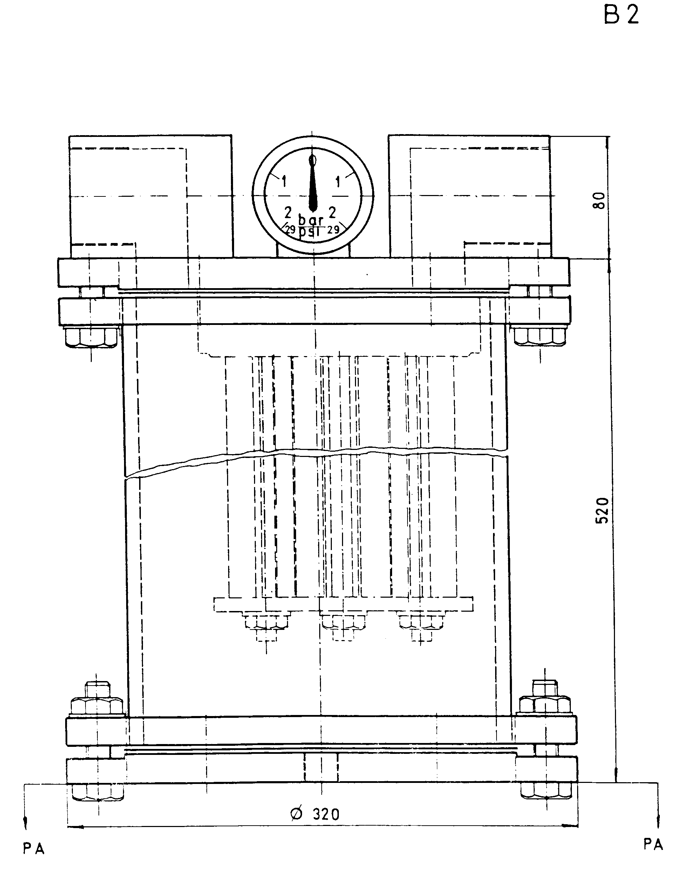

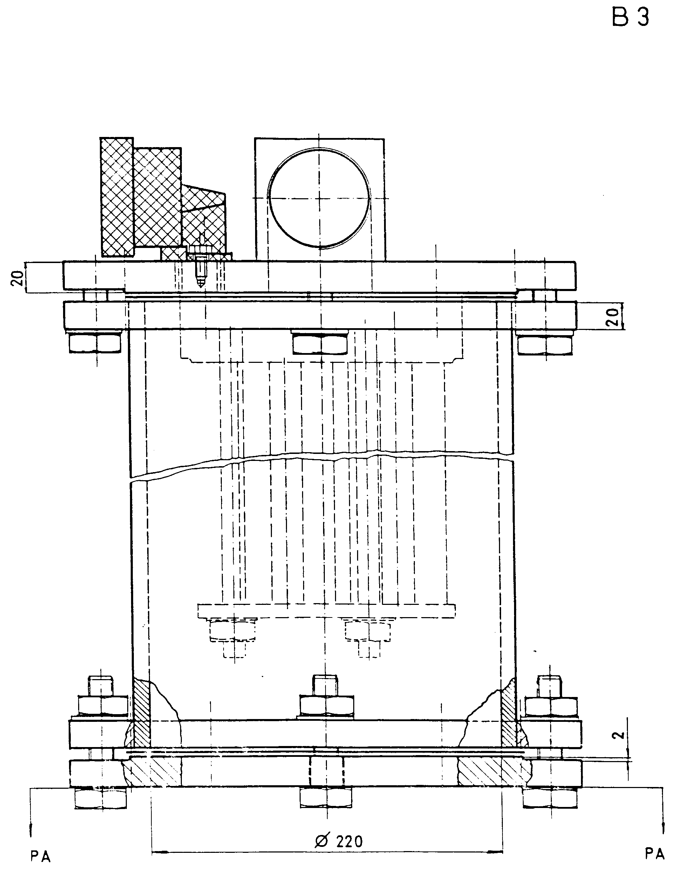

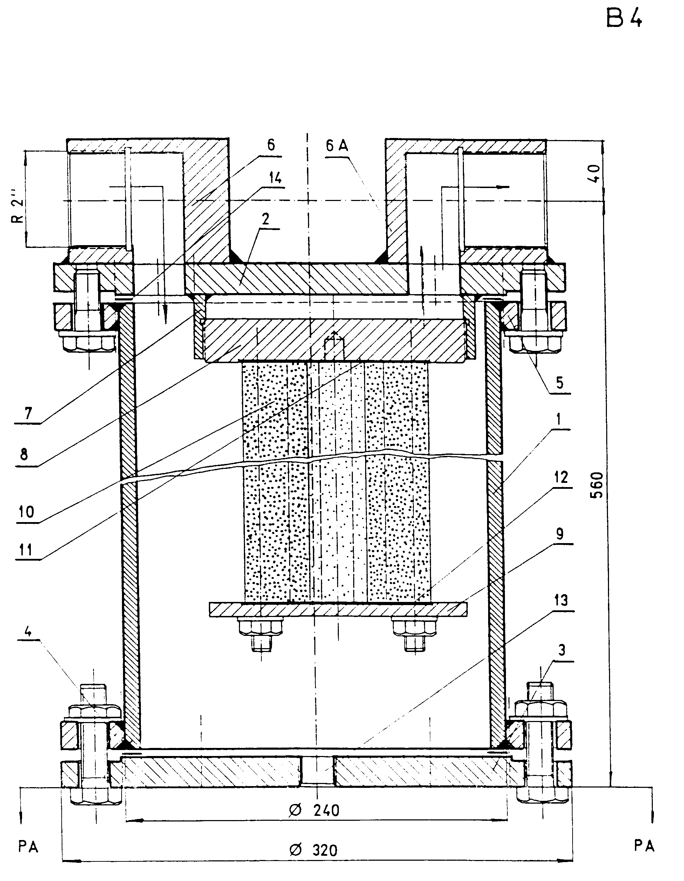

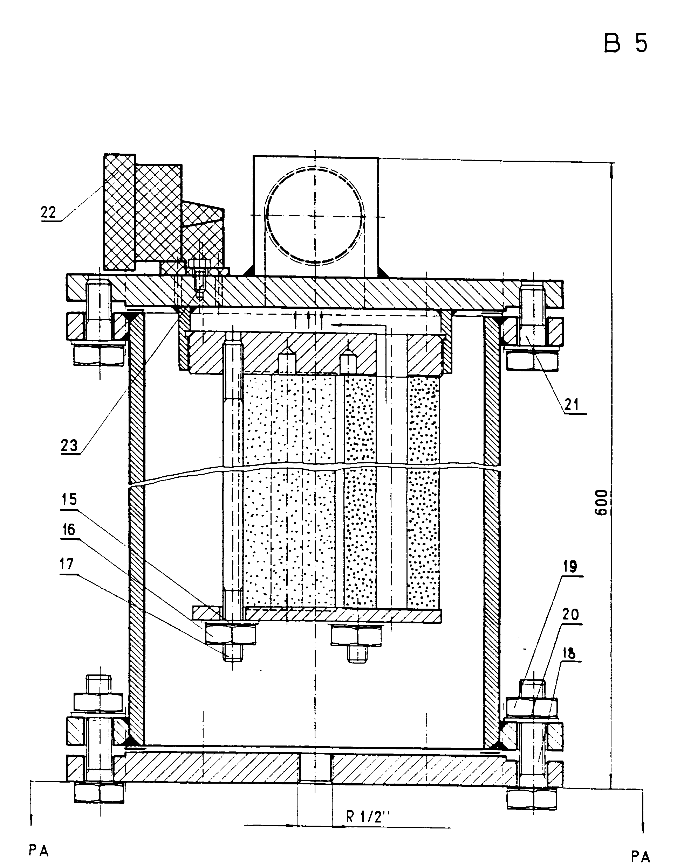

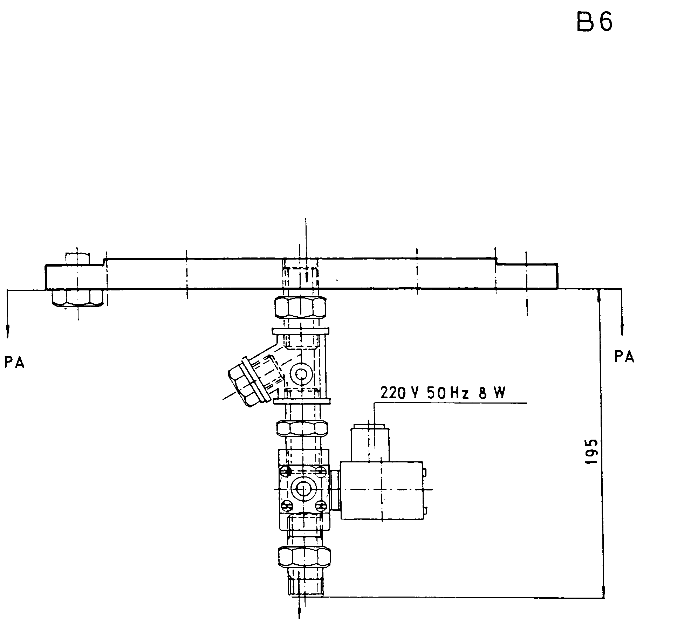

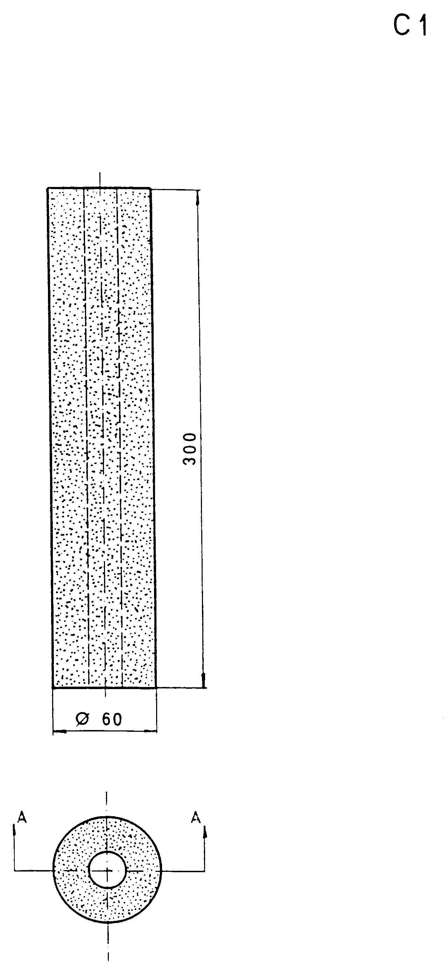

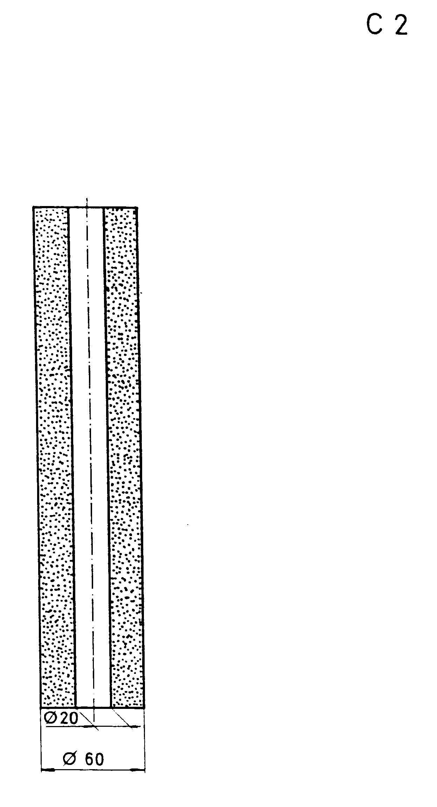

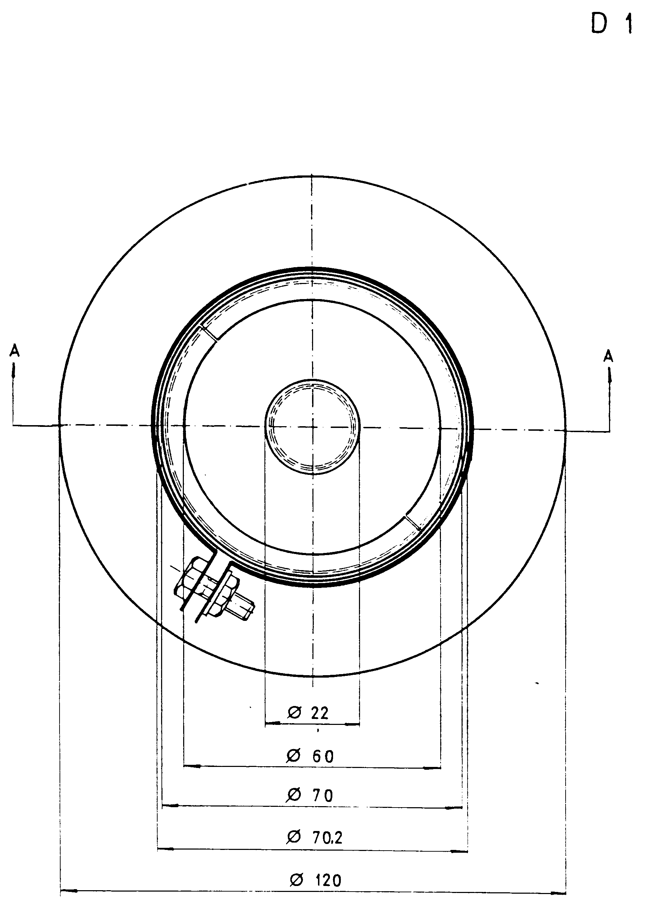

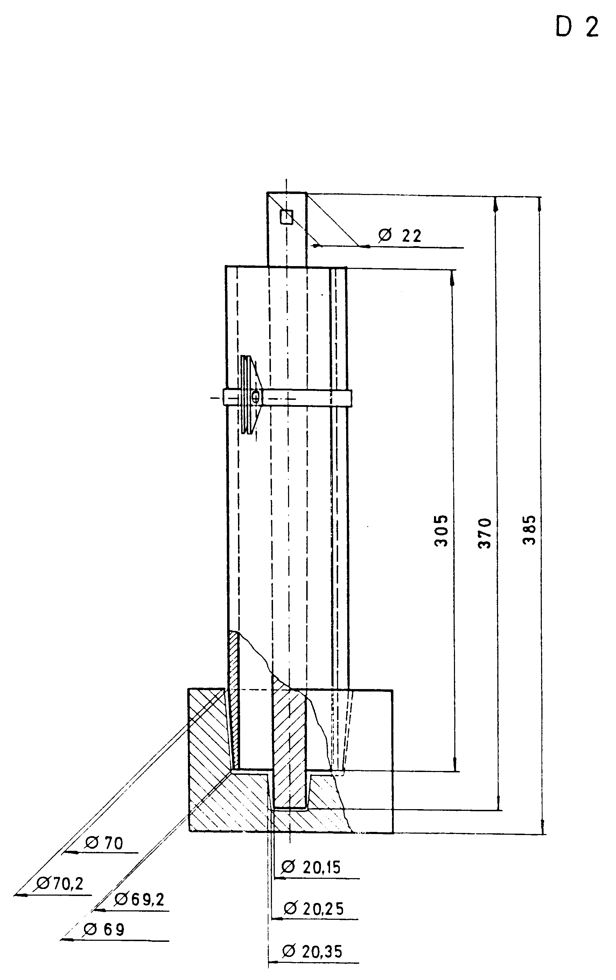

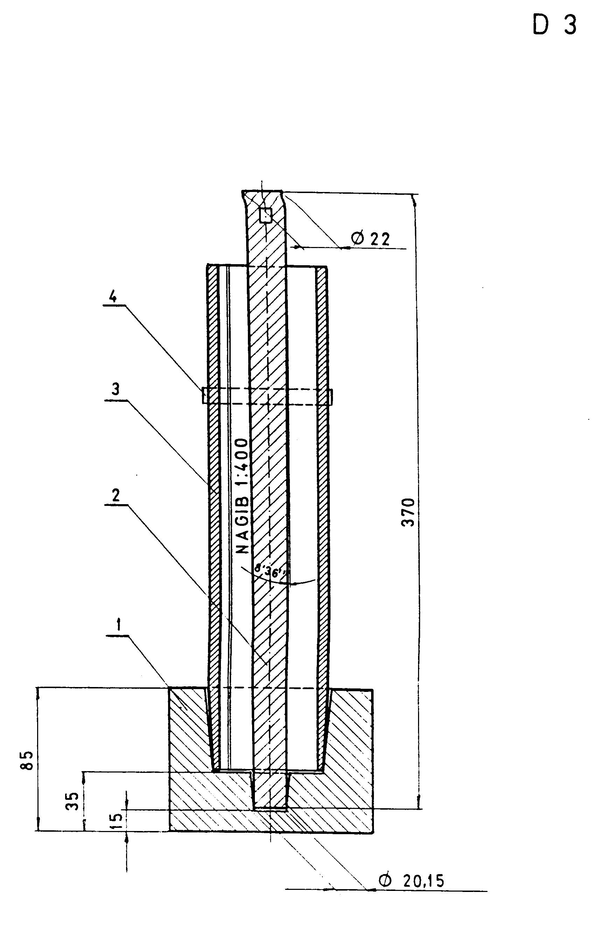

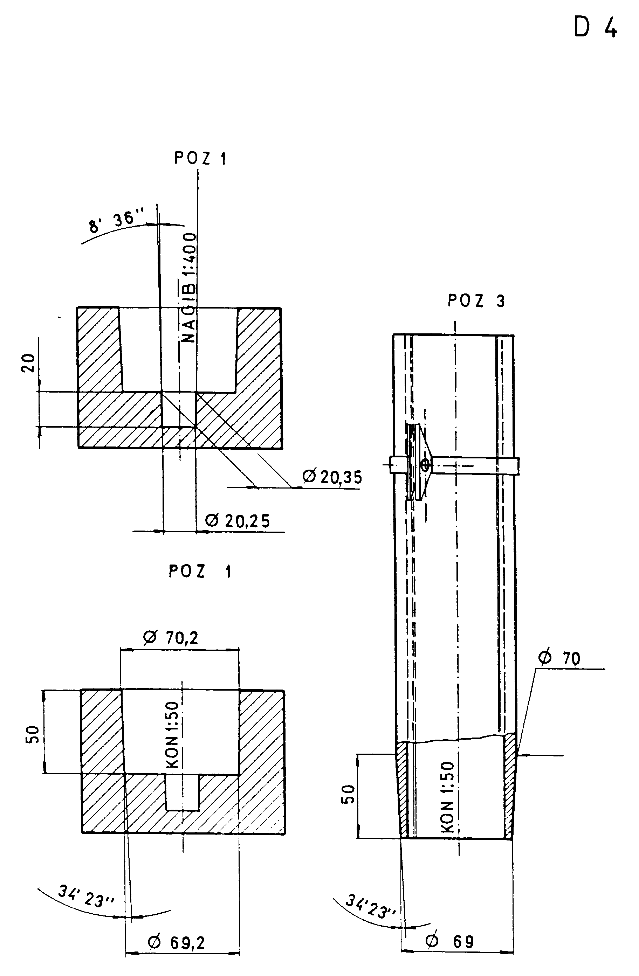

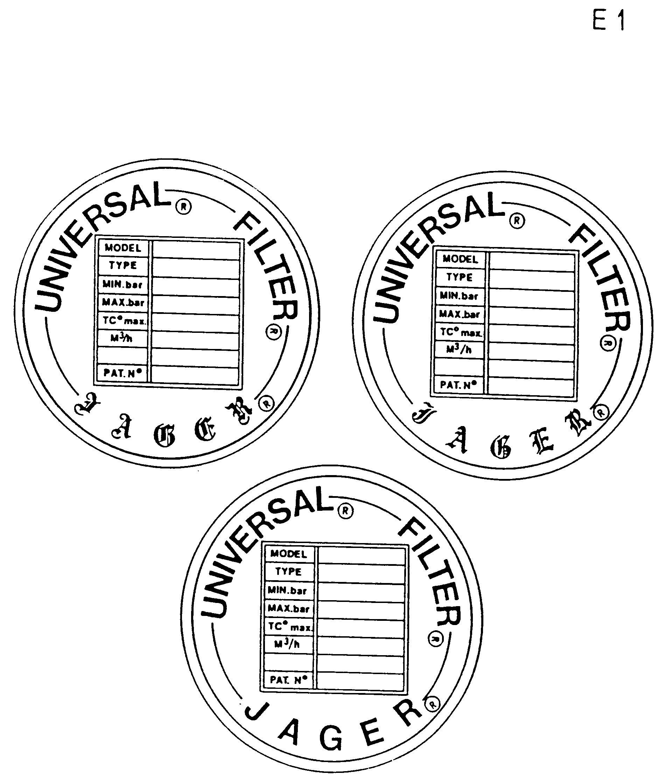

## Patentansprüche

1. Der Universalfilter, bestehend aus Filtermittel und Metallgehäuse. ausgewiesen dadurch, daß es sich durch die Charakteristik der mehrfachen Anwendbarkeit auszeichnet, was durch DIE TECHNOLOGISCHE LÖSUNG DER FILTERMITTELFERTIGUNG ermöglich wird, aus der Siliziumdioxid-Struktur, in der kompakten Rohrbauweise, mit den unabhängigen dargestellten Abmessungen 300 x 60 mm, Wandstärke 20 mm, für welche Lösung nach dem gesamten Wortlaut:

d) Beschreibung der Lösung des technischen Problems
d-1) Gemengezusammensetzung
e) Technologisches Produktionsverfahren
der Formpatentschutz beantragt wird.

2. Der Universalfilter, bestehend aus Metallgehäuse und Filtermittel, ausgewiesen dadurch, daß die Metallgehäuse, worin die Filtermittel eingebaut werden, eine mehrfache Anwendbarkeit der Filtereinrichtung sichern, und für die Konstruktionslösungen der in den Zeichnungen A1, A2, A3, A4, A5, B1, B2, B3, B4 und B5 dargestellt werden, wird der Formpatentschutz, als für einen Komplementärteil des Filtermittels, beantragt.

3. Der Universalfilter, der für den mehrfachen Anwendungszweck vorgesehen wird, ausgewiessen dadurch, daß die mehrfache Anwendbarkeit durch die technologische Lösung der Filtermittelfertigung erreicht, wobei die Metallform zur Filtermittelverformung eingesetzt, deren Konstruktionslösung in den Zeichnungen D1, D2, D3 und D4 dargestellt, wofür Formpatentschutz beantragt wird.

4. Der Universalfilter, der als Filtereinrichtung eigesetzt wird, ausgewiesen dadurch, daß in der Zeichnung E1 die Lösung der Schutzmarke für das Erzeugnis, wofür der Formpatentenschutz beantragt, dargestellt wird.

**Geänderte Patentansprüche gemäß Regel 86(2) EPÜ.**

1. Verfahren zur Herstellung von Filtern, insbesondere für Mehrzweckanwendung, dadurch gekennzeichnet, daß aus Siliziumdioxid durch Formguß Filtermittel (Filterelemente) in Form von Rohren hergestellt, der jeweilige Rohabguß getrocknet, bei 1020° C gebrannt und gegebenenfalls mehrere solche Filtermittel in einem Filtermittel - Gehäuse zu dem Filter zusammengesetzt werden.

2. Verfahren nach Anspruch 1, dadurch gekennzeichnet, daß zur Herstellung des Filtermittels ein Gemenge von Quarzsand 81,0 %, Kalziumoxid 13,5 %, Kalziumkarbonat 5,5 % und daß ein Zusatz von 13,05 ml einer 10 % Lösung von Natrium-Carboxymethylzellulose und 39,13 ml einer 37% Lösung von Natriumsilikat (bezogen auf je 100 g Gemenge) zugegeben wird, welche Gemengezusammensetzung in drei Stufen, nämlich in einem Trockenverfahren, in einem Nassverfahren und mit einer Homogenisierung der Suspension weiterverarbeitet wird.

3. Verfahren nach den Ansprüchen 1 und 2, dadurch gekennzeichnet, daß im Trockenverfahren folgende Proportionalgewichte Verwendung finden: Quarzsand 32,4 kg, Kalziumkarbonat 2,2 kg, Kalziumoxid 5,4 kg, wobei die Mischzeit des Trockengemenges in einem Drehmischer 30 Minuten beträgt und im Nassverfahren folgende Beimischungen zugesetzt werden: durchgemischtes Gemenge 5 kg, 653 ml der 10 % Lösung der Natrium-Carboxymethylzellulose, 1.957 ml der 37 % Lösung des Natriumsilikates, und daß das Nassverfahren durch 3 Minuten hindurch durchgeführt wird, und die Homogenisierung der Suspension durch Durchsieben durch zwei bis drei Minuten durchgeführt wird, wobei das Naßverfahren und die Homogenisierung höchstens durch 10 Minuten durchgeführt werden.

4. Verfahren nach einem der vorhergehenden Ansprüche, dadurch gekennzeichnet, daß als Quarzsand Siliziumdioxid mit folgenden Analysewerten Verwendung findet: $SiO_2$ 96,00 %, $Al_2O_3$ 2,97 %, $Fe_2O_3$ 0,11 %, Glühverlust 0,92 % und nachstehende Granulometrie aufweist: 0,5 mm 26,9 %, 0,4mm 22,8 %, 0,315 mm 16,8%, 0,2 mm 25,1 %, 0,1 mm 7,8%, 0,071 mm 0,4% < 0,071 mm 0,2 %, und daß fernerhin Kalziumkarbonat mit folgenden Analysewerten Verwendung findet: $SiO_2$ 0,27 %, $Al_2O_3$ 0,15 %, $Fe_2O_3$ 0,19%, CaO 55,60 %, MgO 0,12 %, Glühverlust 43,67 % und weiters Kalziumoxid wie folgt: $SiO_2$ 0,48 %, $Al_2O_3$ 0,27 %, $Fe_2O_3$ 0,34 %, CaO 98,70 %, MgO 0,21 %, wobei das Kalziumkarbonat bis zu einer Kornfeinheit von unter 0,045 mm gemahlen wird.

5. Verfahren nach einem der vorhergehenden Ansprüche, dadurch gekennzeichnet, daß als Additiv die Natrium-Carboxy-methylzellulose Verwendung findet, die im Rohzustand als Suspensionsmittel und Zähigkeitsregler zur Wirkung kommt.

6. Verfahren nach einem der vorhergehenden Ansprüche, dadurch gekennzeichnet, daß das Brandverfahren gemäß dem nachstehenden Brenndiagramm durchgeführt wird

7. Filter hergestellt nach dem Verfahren nach einem oder mehreren der vorhergehenden Ansprüche 1 bis 6.

8. Filter nach Anspruch 7, dadurch gekennzeichnet, daß das Filtermittel in Form von Rohren von 300 mm Länge, einem Durchmesser von 60 mm und einer Wandstärke von 20 mm vorliegt.

9. Vorrichtung zur Durchführung des Verfahrens nach einem der Ansprüche 1 bis 6, dadurch gekennzeichnet, daß als Gußform ein Formulagerblock (1) mit einem zentralen Kegelsitz vorgesehen ist, in dem ein mittlerer Formteil (2) und zwei durch einen Spannring (4) zusammengehaltene Aussenformteile (3) eingesetzt sind, (Fig. D3) und gekennzeichnet durch einen Schütteltisch mit einen Formträger, in dem fünf fertig montierte Formen eingesetzt sind, sodaß nach der Betätigung des Schütteltisch-Elektromotors das Gießverfahren durchführbar ist.

A 1

180°

(4OTVORA)⌀18

57,5

r42,5

120°

(2NAVOJA) M18

60°

⌀ 125

⌀ 145

⌀ 185

⌀ 225

A

A

A 2

PM ↑        PM ↑

80 ( 60,40 )

1170 ( 810,450 )

1250 ( 870,490 )

Ø 225

PA        PA

A 3

PM          PM

20

20

Ø 125

2

PA          PA

A 4

A 5

A 6

PM                                        80                        PM

80(60,40)

BOKOCRT

PM                                                                   PM

1     1

2    2
29  bar  29
psi

R2"(N1/2",1")

A 7

PA

PA

220 V 50 Hz 8 W

195

B1

B 2

80

520

∅ 320

P A

P A

B 3

Ø 220

PA

PA

B 4

EP 0 489 218 A1

B 5

PA

PA

26

B6

PA

PA

220 V 50 Hz 8 W

195

C 1

300

Ø 60

A                    A

C 2

Ø 20

Ø 60

D 1

Ø 22

Ø 60

Ø 70

Ø 70.2

Ø 120

D 2

Ø 22

Ø 70

Ø 70,2

Ø 69,2

Ø 69

305

370

385

Ø 20,15

Ø 20,25

Ø 20,35

D 3

Ø 22

NAGIB 1:400

8°36'

370

4

3

2

1

85

35

15

Ø 20,15

D 4

POZ 1

8' 36''

NAGIB 1:400

20

Ø 20,35

Ø 20,25

POZ 1

POZ 3

Ø 70,2

KON 1:50

50

Ø 70

KON 1:50

50

34' 23''

Ø 69,2

34'23''

Ø 69

E 1

Europäisches
Patentamt

**EUROPÄISCHER RECHERCHENBERICHT**

Nummer der Anmeldung

EP 90 89 0311

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN, Band 14, Nr. 229, 27. Juni 1990, Seite 44 C 733; & JP-A-2 97 471 (TOSHIBA CERAMICS) 10-04-1990<br>--- | | B 01 D 39/20<br>C 04 B 38/00<br>C 04 B 35/14 |
| A | CHEMICAL ABSTRACTS, Band 106, Nr. 14, April 1987, Seite 301, Zusammenfassung Nr. 106885q, Columbus, Ohio, US; & JP-A-61 247 660 (HARIMA REFRACTORIES) 04-11-1986<br>--- | | |
| A | WO-A-8 402 520 (E. RABE)<br>--- | | |
| A | US-A-2 718 686 (A. GARBATI)<br>--- | | |
| A | EP-A-0 266 608 (SCHOTT GLASWERKE)<br>--- | | |
| A | EP-A-0 117 484 (SCHOTT GLASWERKE)<br>--- | | |
| A | EP-A-0 236 498 (K.K. OSAKA PACKING SEIZOSHO)<br>----- | | |
| | | | **RECHERCHIERTE SACHGEBIETE (Int. Cl.5)**<br><br>B 01 D 39/00<br>B 01 D 71/00<br>C 04 B 38/00<br>C 04 B 35/00 |

Der vorliegende Recherchenbericht wurde für alle Patentansprüche erstellt

| Recherchenort | Abschlußdatum der Recherche | Prüfer |
|---|---|---|
| DEN HAAG | 30-07-1991 | DEVISME F.R. |

EPO FORM 1503 03.82 (P0403)